# EUROPÄISCHE PATENTSCHRIFT

(11) **EP 3 908 765 B1**
(45) Veröffentlichungstag und Bekanntmachung des Hinweises auf die Patenterteilung: **23.10.2024**
(21) Anmeldenummer: 19701455.8
(22) Anmeldetag: 11.01.2019
(51) Int. Cl.: F16D 23/12, F16D 28/00

(54) **AKTUATORANORDNUNG FÜR EINE KUPPLUNGSANORDNUNG FÜR EINEN ANTRIEBSSTRANG EINES KRAFTFAHRZEUGS**
ACTUATOR ASSEMBLY FOR A CLUTCH ASSEMBLY FOR THE POWERTRAIN OF A MOTOR VEHICLE
ARRANGEMENT ACTIONNEUR POUR UN ARRANGEMENT D'ACCOUPLEMENT POUR UNE CHAÎNE CINÉMATIQUE D'UN VÉHICULE AUTOMOBILE

(43) Veröffentlichungstag der Anmeldung: 17.11.2021
(73) Patentinhaber: GKN Automotive Limited, Birmingham, West Midlands B37 7YE (GB)
(72) Erfinder: HAUPT, Jan, 51515 Kürten (DE); GASSMANN, Theodor, 53721 Siegburg (DE); WECKERLING, Thomas, 53757 Sankt Augustin (DE)
(74) Vertreter: Neumann Müller Oberwalleney Patentanwälte PartG mbB
(86) Internationale Anmeldenummer: PCT/EP2019/050689
(87) Internationale Veröffentlichungsnummer: WO 2020/143921

(56) Entgegenhaltungen:
- EP-A1- 3 543 554
- WO-A1-2015/120909
- WO-A1-2015/120909
- WO-A1-2017/125135
- WO-A1-2017/125135
- WO-A1-2018/014950
- WO-A1-2018/014950
- DE-A1- 102018 124 681
- DE-A1- 102018 124 681

## Beschreibung

Die Erfindung betrifft eine Aktuatoranordnung für einen Antriebsstrang eines Kraftfahrzeugs. Die Erfindung betrifft ferner eine Kupplungsanordnung mit einer solchen Aktuatoranordnung sowie eine entsprechende Antriebsanordnung zum Antreiben eines Kraftfahrzeugs mit einer solchen Aktuatoranordnung.

Generell werden Aktuatoren für eine Vielzahl von Funktionseinheiten in Antriebssträngen von Kraftfahrzeugen verwendet. Beispielsweise sind Aktuatoren für Kupplungen bekannt, die in Antriebssträngen von Kraftfahrzeugen eingesetzt werden, um eine Drehmomentübertragung selektiv herzustellen, zu unterbrechen oder auf einen gewünschten Wert einzustellen.

Es sind mehrachsgetriebene Kraftfahrzeuge mit einem ersten Antriebsstrang zum permanenten Antreiben einer ersten Antriebsachse sowie einem zweiten Antriebsstrang zum optionalen Antreiben einer zweiten Antriebsachse bekannt. Dabei werden unterschiedliche Antriebskonzepte unterschieden, beispielsweise Kraftfahrzeuge mit Frontmotor, bei denen die Vorderachse permanent angetrieben wird und die Hinterachse zuschaltbar ist. Weiter gibt es Kraftfahrzeuge mit Frontmotor, bei denen die Hinterachse permanent angetrieben ist und die Vorderachse zuschaltbar ist. Schließlich sind Kraftfahrzeuge mit Heckmotor bekannt, bei denen die Hinterachse permanent angetrieben ist und die Vorderachse bedarfsweise zugeschaltet wird. Dabei kann die zuschaltbare Antriebsachse beispielsweise von einem Elektromotor antreibbar sein.

Aus der gattungsbildenden WO 2015/120909 A1 ist eine Kupplungsanordnung für einen Antriebsstrang eines Kraftfahrzeugs bekannt. Die Kupplungsanordnung umfasst eine Kupplung, welche zwei Wellen antriebsmäßig verbinden oder trennen kann, eine Bremse zum Bremsen der zweiten Welle und eine Betätigungsvorrichtung zum Betätigen der Kupplung und der Bremse. Die Betätigungsvorrichtung weist einen Rampenmechanismus auf, mit einem ersten Ring, der gegenüber dem ortsfesten Bauteil axial abgestützt ist, und einem zweiten Ring, der gegenüber dem ersten Ring axial verschiebbar ist, wenn einer von den Ringen relativ zum anderen verdreht wird.

Aus der WO 2018/014950 A1 ist eine weitere Aktuatoranordnung mit einer Rampeneinheit zur Betätigung einer Kupplung im Antriebsstrang eines Kraftfahrzeugs bekannt.

Aus der WO 2017/125135 A1 ist eine Kupplungsanordnung für ein Fahrzeug mit einer Trennkupplung zum Abschalten eines Antriebsstrangs und einer Kugelrampeneinheit zum Öffnen der Trennkupplung bekannt.

Aus der DE 10 2018 124 681 A1 ist eine Vorrichtung zum Synchronisieren zwischen einer Welle und einem Losrad, mit einer Betätigungseinrichtung bekannt.

Aus der gegenüber diesem Dokument nachveröffentlichten EP 3 543 554 A1 ist eine Kupplungsvorrichtung mit einer Rolleneinwegkupplung und einer Nockenkupplung bekannt. Die Rolleneinwegkupplung ist so gestaltet, dass die Drehbewegung eines Innenlaufrings der Kupplung in einer Richtung ermöglicht und in der anderen Richtung gesperrt wird. Die Nockenkupplung wirkt als Bremse, welche die Drehbewegung des Innenlaufrings in beiden Richtungen blockieren kann. Hierfür umfasst die Nockenkupplung einen axial bewegbaren Arbeitsring mit axialen Zapfen, die mit entsprechenden Ausnehmungen des Innenlaufrings formschlüssig in Eingriff gebracht werden können.

Aus der DE 10 2008 063 904 A1, entsprechend WO2010/078937 A1, ist eine Antriebsanordnung für ein mehrachsgetriebenes Kraftfahrzeug bekannt. Die Antriebsanordnung umfasst eine Differentialeinheit, eine steuerbare Zuschaltkupplung zum antriebsmäßigen Verbinden mit einer Antriebseinheit sowie eine Sperrkupplung zum Sperren der Ausgleichsbewegung des Differentials. Die beiden Kupplungen sind koaxial zueinander angeordnet und mittels einer Kugelrampenanordnung betätigbar. Nach einer Ausführungsform ist vorgesehen, dass zuerst die Sperrkupplung und dann die Zuschaltkupplung betätigt wird. Nach einer anderen Ausführungsform ist vorgesehen, dass erst die Zuschaltkupplung und dann die Sperrkupplung betätigt wird.

Es sind Aktuatoren für Parksperren bekannt, die in Antriebssträngen von Kraftfahrzeugen eingesetzt werden, um ein Antriebsbauteil im Antriebsstrang optional zu blockieren, so dass das Kraftfahrzeug an einem unbeabsichtigten Wegrollen gehindert wird, wenn die Antriebsquelle kein Drehmoment zur Verfügung stellt.

Aus der DE 10 2005 022 926 B3 ist eine Antriebseinheit für ein Kraftfahrzeug bekannt, mit einem elektrischen Motor, einem Wechselgetriebe mit wenigstens zwei Gangstufen und einem Differential. Zur Betätigung der zwei Gangstufen ist eine Aktuatoranordnung vorgesehen, die eine drehend antreibbare Schaltwalze aufweist. Mittels der Schaltwalze wird eine Schaltmuffe betätigt, die eine erste Schaltkupplung oder alternativ eine zweite Schaltkupplung betätigt. Es ist ferner eine Parksperreneinrichtung vorgesehen, die koaxial zur Motorwelle angeordnet ist. Die Parksperreneinrichtung weist eine Sperrmuffe auf, die zwischen einer Freigabeposition und einer Sperrposition axial verschieblich gelagert ist. Die Sperrmuffe ist mittels der gleichen Aktuatoranordnung betätigbar, wie die Schaltkupplungen.

Es ist eine Aufgabe der vorliegenden Erfindung, eine multi-funktionale Aktuatoranordnung vorzuschlagen, die einfach und platzsparend aufgebaut ist. Eine weitere Aufgabe besteht darin, eine Kupplungsanordnung beziehungsweise Antriebsanordnung mit einer solchen Aktuatoranordnung vorzuschlagen.

Zur Lösung wird eine Aktuatoranordnung für eine Kupplungsanordnung im Antriebsstrang eines Kraftfahrzeugs vorgeschlagen, umfassend: ein drehend antreibbares Antriebsrad; einen Sperrring, der in einem ortsfesten Gehäuse um eine Drehachse drehbar gelagert ist und der mit dem Antriebsrad über einen Leistungspfad antriebsverbunden ist, wobei der Sperrring von dem Antriebrad von einer ersten Drehposition gegen einen Drehanschlag in eine zweite Drehposition drehbar ist; wobei im Leistungspfad zwischen dem Antriebsrad und dem Sperrring zumindest eine Reibflächenpaarung vorgesehen ist, über die ein Drehmoment unter Ausnutzung von Reibkräften auf den Sperrring übertragbar ist; einen von dem Antriebsrad drehend antreibbaren ersten Rampenring und einen zweiten Rampenring, wobei der erste Rampenring und der zweite Rampenring gegeneinander axial abgestützt sind, und ausgestaltet sind, um eine relative Drehbewegung in eine Axialbewegung umzusetzen; wobei der Rampenring, nachdem der Sperrring den Drehanschlag erreicht hat, vom Antriebsrad weiter drehend antreibbar ist.

Ein Vorteil ist, dass die Aktuatoranordnung zwei Funktionen realisieren kann, nämlich das Betätigen des Sperrrings, beispielsweise für eine Freilaufkupplung, sowie das Betätigen eines weiteren Betätigungsglieds, beispielsweise für eine Reibungskupplung. Damit benötigt die vorgeschlagene Aktuatoranordnung nur eine geringe Anzahl von Bauteilen, was sich günstig auf den erforderlichen Bauraum und die Fertigungs- und Montagekosten auswirkt. Außerdem wird zusätzlich zur mechanischen Integration einer ersten und einer zweiten Betätigungsfunktion entsprechend auch eine elektrische Integration erreicht, was sich aufgrund einer geringeren Anzahl von elektrischen Schnittstellen ebenfalls günstig auf die Zuverlässigkeit und Lebensdauer der Anordnung auswirkt.

Nach einer Ausführung kann der Sperrring einen Ringabschnitt und zumindest ein hiervon abstehendes Verbindungselement zum Einleiten eines Drehmoments in den Sperrring aufweisen. Mit dem Ringabschnitt kann der Sperrring in dem ortsfesten Gehäuse begrenzt drehbar gelagert sein. Es können ein, zwei, drei oder mehr Verbindungselemente vorgesehen sein, die insbesondere gleichmäßig über den Umfang verteilt sind und von dem Ringabschnitt nach radial außen abstehen können. Es versteht sich, dass sofern vorliegend auf ein oder zumindest ein Verbindungsabschnitt Bezug genommen wird, die beschriebenen Merkmale auch für jeden weiteren Verbindungsabschnitt gelten können.

Das ortsfeste Gehäuse kann einen hülsenförmigen Abschnitt aufweisen, in dem der Sperrring um die Drehachse drehbar gelagert ist, wobei der hülsenförmige Abschnitt zumindest einen radialen Durchbruch aufweist, in den das zumindest eine Verbindungselement des Sperrrings eingreift. Vorzugsweise ist je Verbindungselement ein Durchbruch vorgesehen.

Nach einer ersten Ausführungsform des Sperrelements ist das zumindest eine Verbindungselement federnd gegen einen vom Antriebsrad drehend antreibbaren Betätigungsring beaufschlagt und steht mit diesem in Reibkontakt. Der Betätigungsring ist relativ zum Sperrring verdrehbar, wobei durch Drehen des Betätigungsrings der Sperrring aufgrund der Reibwirkung mitgenommen wird, bis der Sperrring gegen einen Drehanschlag zur Anlage kommt. Nach Drehstopp des Sperrrings dreht der Betätigungsring weiter, wobei das zumindest eine Verbindungselement an der Kontaktfläche des Betätigungsrings entlanggleitet. In einer weiteren Konkretisierung kann das zumindest eine Verbindungselement über ein Federelement gegen einen Grundkörper des Sperrrings federnd abgestützt sein. Der Grundkörper des Sperrrings ist insbesondere ringförmig gestaltet und hat über den Umfang verteilt vorzugsweise mehrere radiale Bohrungen, in denen jeweils ein Verbindungselement federnd abgestützt einsitzt. Ein Verbindungselement und zugehöriges Federelement können als separate Elemente ausgebildet sein, wobei es ebenso möglich ist, dass diese fest miteinander verbunden und/oder einteilig gestaltet sind.

Der Betätigungsring, mit dem der Sperrring über die Verbindungselemente in Reibkontakt ist, kann prinzipiell ein beliebiges Bauteil im Leistungspfad zwischen dem Antriebsrad und dem Sperrring sein. Nach einer ersten Option kann der Betätigungsring drehfest mit dem drehend antreibbaren ersten Rampenring verbunden sein, insbesondere einteilig mit diesem gestaltet sein. Dabei ist die Reibflächenpaarung zum drehenden Antreiben des Sperrrings jeweils zwischen einer Kontaktfläche eines Verbindungselements und einer Anlagefläche des ersten Rampenrings gebildet. Nach einer zweiten Option kann der Betätigungsring in Form eines Zwischenrads gestaltet sein, das von dem Antriebsrad um die Drehachse drehend antreibbar ist. Dabei ist die Reibflächenpaarung jeweils zwischen einer Kontaktfläche eines Verbindungselements und einer Anlagefläche des Zwischenrads gebildet. Bei dieser Ausführung kann das Antriebsrad eine erste Verzahnung zum Antreiben des ersten Rampenrings und eine zweite Verzahnung zum Antreiben des Zwischenrads aufweisen, wobei die beiden Verzahnungen einen unterschiedlichen Durchmesser beziehungsweise eine unterschiedliche Zähnezahl haben.

Nach einer zweiten Ausführungsform kann das Sperrelement über das zumindest eine Verbindungselement drehfest mit dem zweiten Rampenring verbunden sein, so dass beide gemeinsam drehen. In diesem Fall ist die Reibflächenpaarung im Leistungspfad zwischen dem drehend antreibbaren ersten Rampenring und dem zweiten Rampenring gebildet. Wenn der erste Rampenring vom Antriebsrad verdreht wird, dreht sich der zweite Rampenring und der damit drehfest verbundene Sperrring zunächst mit, bis der Sperring gegen einen Drehanschlag des ortsfesten Gehäuses stößt. Nach diesem Drehstopp des Sperrrings und des damit verbundenen zweiten Rampenrings dreht der erste Rampenring gegenüber diesen weiter, wobei die Drehbewegung des ersten Rampenrings relativ zum zweiten Rampenring zu einer axialen Spreizung der Kugelrampenanordnung führt.

Für alle oben genannten Ausführungen gilt insbesondere, dass der erste Rampenring und der zweite Rampenring mittelbar über Kugeln gegeneinander axial abgestützt sind, die in entsprechenden Kugelrillen des ersten und zweiten Rampenrings laufen. Die Kugelrillen können so gestaltet sein, dass sie jeweils in Draufsicht auf die Stirnflächen in gleicher Umfangsrichtung eine abnehmende Tiefe haben, wobei in Paaren von einander gegenüberliegenden Kugelrillen jeweils eine Kugel aufgenommen ist, über die sich der erste und der zweite Ring aneinander abstützen. Bei relativer Verdrehung des einen Rampenrings relativ zum anderen Rampenring wandern die Kugeln, je nach Drehrichtung, in tiefere oder flachere Rillenbereiche, so dass sich die beiden Rampenringe entweder axial annähern oder voneinander entfernen. Alternativ zur Ausgestaltung mit Kugelrillen können der erste Rampenring und der zweite Rampenring auch unmittelbar gegeneinander über entsprechende Gleitflächen axial abgestützt sein.

Nach einer möglichen Ausführungsform ist der zweite Rampenring gegen das ortsfeste Gehäuse axial abgestützt ist, wobei der erste Rampenring durch drehendes Antreiben mittels des Antriebsrads aus einer ersten Axialposition, in welcher der erste Rampenring an den zweiten Rampenring axial angenähert ist, in eine zweite Axialposition, in welcher der erste Rampenring vom zweiten Rampenring axial beabstandet ist, bewegbar ist. Der erste Rampenring kann an seiner vom zweiten Rampenring abgewandten Seite eine Betätigungsfläche zum axialen Beaufschlagen einer Reibungskupplung aufweisen.

Die Aufgabe wird ferner gelöst durch eine Kupplungsanordnung mit einer Aktuatoranordnung, die nach zumindest einer der oben genannten Ausführungsformen gestaltet ist, umfassend: eine Formschlusskupplung mit einem ersten Kupplungselement und einem hierzu axial bewegbaren zweiten Kupplungselement, wobei das zweite Kupplungselement in einer Schließstellung drehfest mit dem ersten Kupplungselement verbunden ist und in einer Offenstellung vom ersten Kupplungselement entkoppelt ist, um gegenüber diesem frei drehbar zu sein; eine Reibungskupplung zur variablen Drehmomentübertragung zwischen einem ersten Kupplungsteil und einem zweiten Kupplungsteil; wobei der Sperrring der Aktuatoranordnung in der ersten Drehposition eine Axialbewegung des zweiten Kupplungselements der Formschlusskupplung blockiert, wobei die Formschlusskupplung geschlossen ist; wobei der Sperrring, durch Verdrehen in die zweite Drehposition mittels des Antriebsrads, das zweite Kupplungselement der Formschlusskupplung axial freigibt, so dass die Formschlusskupplung geöffnet wird; wobei bei weiterem Verdrehen des Antriebsrads der Sperrring in der zweiten Drehposition verbleibt und die Reibungskupplung von dem drehend antreibbaren ersten Rampenring im Schließsinn beaufschlagt wird.

Nach einer Ausführungsform kann das erste Kupplungselement der Formschlusskupplung im ortsfesten Gehäuse im Drehsinn abgestützt und axial bewegbar sein. Durch axiales Verstellen des ersten Kupplungselements wird die Blockade des Sperrrings aufgehoben, so dass die beiden Kupplungselemente frei gegeneinander drehen können. Insofern kann das erste Kupplungselement der Formschlusskupplung auch als Stellelement oder Blockierelement, und die Formschlusskupplung auch als Freilaufkupplung bezeichnet werden. Das zweite Kupplungselement der Formschlusskupplung kann drehfest und axial fest mit einer Welle verbunden sein.

Die Reibungskupplung kann mit dem ersten Reibungs-Kupplungsteil drehfest und axial beweglich verbundene erste Lamellen und mit dem zweiten Reibungs-Kupplungsteil drehfest und axial beweglich verbundene zweite Lamellen aufweisen, wobei die ersten und zweiten Lamellen insbesondere axial abwechselnd angeordnet sind und gemeinsam ein Lamellenpaket bilden. Das Lamellenpaket ist von einer Druckplatte axial beaufschlagbar, die von dem ersten Rampenring betätigbar ist, wobei zwischen dem ersten Rampenring und der Druckplatte ein Axiallager zur Drehentkopplung vorgesehen ist.

Nach einer Ausführungsform kann ein Umlaufrädergetriebe vorgesehen sein mit einem Getriebeeingangsteil und ein Eingangsrad aufweist, das von der elektrischen Maschine um eine Drehachse (A) drehend antreibbar ist, einem Stützrad, das koaxial zum Eingangsrad drehbar angeordnet ist und das mit dem Stützelement der Formschlusskupplung drehfest verbunden ist, wobei das Stützrad in der Schließstellung der Formschlusskupplung am ortsfesten Bauteil im Drehsinn abgestützt ist, und in einer Offenstellung der Formschlusskupplung frei drehbar ist, einer Mehrzahl von Planetenrädern, die mit dem Eingangsrad und dem Stützrad in Verzahnungseingriff sind, und einem Trägerelement, auf dem die Planetenräder drehbar gelagert sind und das um die Drehachse drehend antreibbar ist, um Drehmoment auf eine nachgelagerte Antriebseinheit zu übertragen, wobei die Reibungskupplung im Leistungspfad zwischen einem der Teile Eingangsrad, Stützrad und Trägerelement und einem anderen der Teile Eingangsrad, Stützrad und Trägerelement angeordnet ist.

Es ist insbesondere vorgesehen, dass in Schließstellung der Formschlusskupplung und Offenstellung der Reibungskupplung ein erstes Übersetzungsverhältnis zwischen dem Antriebsrad und dem Trägerelement gebildet ist, und, dass in Offenstellung der Formschlusskupplung mittels der Reibungskupplung ein variables Drehmoment zwischen dem Antriebsrad und dem Trägerelement übertragbar ist, wobei bei vollständig geschlossener Reibungskupplung ein zweites Übersetzungsverhältnis zwischen dem Antriebsrad und dem Trägerelement gebildet ist.

Das Trägerelement des Umlaufrädergetriebes kann mit einer nachgelagerten Leistungsverzweigungseinheit antriebsverbunden sein, die beispielsweise in Form eines Differentialgetriebes gestaltet sein kann. Das Differentialgetriebe teilt die eingeleitete Drehbewegung auf zwei Ausgangsteile zum Antreiben einer jeweiligen Seitenwelle auf. Anstelle eines Differentialgetriebes kann auch eine Doppelkupplungseinheit als Leistungsverzweigungseinheit verwendet werden (Twin-Kupplung).

Bevorzugte Ausführungsformen werden nachstehend anhand der Zeichnungsfiguren erläutert. Hierin zeigt:
- Figur 1A: eine erfindungsgemäße Aktuatoranordnung für eine Kupplungsanordnung im Antriebsstrang eines Kraftfahrzeugs in einer ersten Ausführungsform im Längsschnitt;
- Figur 1B: die Aktuatoranordnung aus Figur 1A gemäß Schnittlinie 1B-1B;
- Figur 1C: ein Detail der Aktuatoranordnung aus Figur 1B in vergrößerter Darstellung;
- Figur 2A: eine Kupplungsanordnung mit einer Formschlusskupplung und einer Reibungskupplung sowie mit einer erfindungsgemäßen Aktuatoranordnung gemäß Figur 1A und 1B im Längsschnitt;
- Figur 2B: die Kupplungsanordnung aus Figur 2A im Halblängsschnitt mit geschlossener Formschlusskupplung;
- Figur 2C: die Kupplungsanordnung aus Figur 2A im Halblängsschnitt mit geöffneter Formschlusskupplung;
- Figur 3: schematisch eine Antriebssanordnung mit einer erfindungsgemäßen Aktuatoranordnung gemäß Figur 1;
- Figur 4A: eine erfindungsgemäße Aktuatoranordnung für eine Kupplungsanordnung im Antriebsstrang eines Kraftfahrzeugs in einer zweiten Ausführungsform im Längsschnitt;
- Figur 4B: die Aktuatoranordnung aus Figur 4A gemäß Schnittlinie 4B-4B;
- Figur 5A: eine erfindungsgemäße Aktuatoranordnung für eine Kupplungsanordnung im Antriebsstrang eines Kraftfahrzeugs in einer weiteren Ausführungsform im Längsschnitt; und
- Figur 5B: die Aktuatoranordnung aus Figur 5A gemäß Schnittlinie 5B-5B.

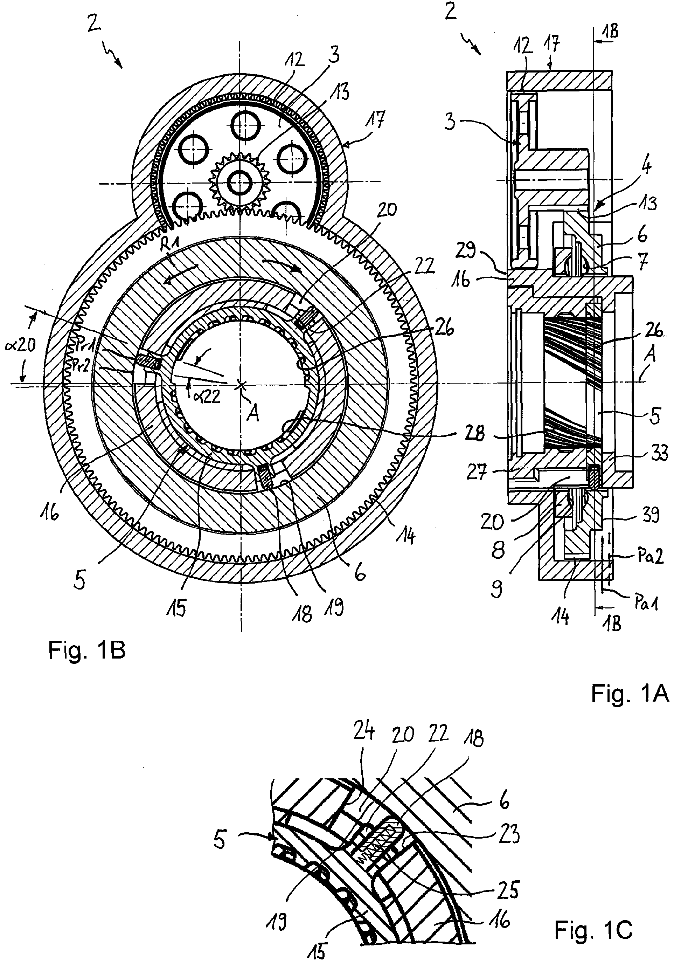

Die Figuren 1 bis 3 werden nachstehend gemeinsam beschrieben. Es ist eine erfindungsgemäße Aktuatoranordnung 2 zum Aktuieren von Kupplungen im Antriebsstrang eines Kraftfahrzeugs gezeigt. Die Aktuatoranordnung 2 umfasst ein Antriebsrad 3, das von einer Aktuator-Antriebseinheit (nicht dargestellt) antreibbar ist, eine Rampenringanordnung 4, die ausgestaltet ist, um eine vom Antriebsrad 3 eingeleitete Drehbewegung in eine Axialbewegung umzuwandeln, und einen Sperrring 5, der mit dem Antriebsrad 3 mittelbar antriebsverbunden ist, um von diesem um die Drehachse A verdreht zu werden.

Die Rampenringanordnung 4 ist vorliegend in Form einer Kugelrampeneinheit gestaltet, die einen ersten Rampenring 6 mit mehreren umfangsverteilten ersten Kugelbahnen 7, einen zweiten Rampenring 8 mit mehreren umfangsverteilten zweiten Kugelbahnen 9 und mehrere umfangsverteilten Kugeln, die jeweils zwischen einer ersten Kugelbahn 7 und einer zweiten Kugelbahn 9 angeordnet und in diesen geführt sind. Die Kugeln liegen außerhalb der gezeigten Schnittebene und sind daher nicht dargestellt.

Das Aktuator-Antriebsrad 3 ist mit dem ersten Rampenring 6 antriebsverbunden, um dieses um die Drehachse A zu verdrehen. Hierfür hat das Antriebsrad 3 eine erste Verzahnung 12 zur Einleitung einer Drehbewegung von einer Antriebsquelle sowie eine zweite Verzahnung 13, die mit einer Gegenverzahnung 14 des ersten Rampenrings 6 in Eingriff ist.

Der zweite Rampenring 8 ist gegen ein ortsfestes Bauteil 16 axial abgestützt und drehfest gehalten. Das ortsfeste Bauteil 16 ist vorliegend als hülsenförmiger Abschnitt eines Gehäuses 17 gestaltet. Durch eine relative Drehbewegung des ersten Rampenrings 6 gegenüber dem drehfesten zweiten Rampenring 8 laufen die Kugeln in den Kugelrillen 7, 9 in Umfangsrichtung, wobei - wenn die Kugeln in flachere Abschnitte der Kugelrillen 7, 9 laufen - der erste Rampenring 6 vom zweiten Rampenring 8 axial wegbewegt wird.

Der Sperrring 5 hat mehrere über den Umfang verteilte Verbindungselemente 18, die mit einer Innenumfangsfläche 19 eines Betätigungsrings 59 des ersten Rampenrings 6 in Reibkontakt stehen. Bei der vorliegenden Ausführungsform ist der Betätigungsring 59 mit dem Rampenring 6 gestaltet. Es sind vorliegend genau drei regelmäßig über den Umfang verteilte Verbindungselemente 18 vorgesehen, wobei auch eine hiervon abweichende Anzahl möglich ist. Die Verbindungselemente 18 erstrecken sich nach radial außen durch umfangsverteilte Öffnungen 20 des ortsfesten Bauteils 16 hindurch. Die Öffnungen 20 haben eine Umfangserstreckung α20, die größer ist, als eine Umfangserstreckung α22 der Verbindungselemente 18 beziehungsweise der Stützelemente 22, in denen die Verbindungselemente 18 aufgenommen sind, so dass der Sperrring 5 relativ zum ortsfesten Bauteil 16 begrenzt drehbar ist. Dabei bilden die Seitenwände 23, 24 der Öffnungen 20 Drehanschläge, gegen welche die Stützelemente 22 sich in Umfangsrichtung abstützen können. Es ist insbesondere in der unteren Schnitthälfte von Figur 1A erkennbar, dass die Öffnungen 20 vorliegend in Form von Schlitzen gestaltet sind, die sich von einem freien Ende 29 des hülsenförmigen Gehäuseteils 16 bis zu einem Axialanschlag 33 erstrecken, gegen den der Sperrring 5 axial abgestützt ist.

Bei der vorliegenden Ausführungsform sind die Verbindungselemente 18 jeweils über ein Federelement 25 gegen das jeweilige Stützelement 22 in radiale Richtung federnd abgestützt. Durch die Federvorspannung werden die Verbindungselemente 18 in Reibkontakt mit der Innenfläche 19 des ersten Rings 6 gebracht, so dass sie bei Drehung des ersten Rings 6 mit diesem mitdrehen, bis sie je nach Drehrichtung gegen den einen oder anderen Drehanschlag 23, 24 in Anlage kommen. Nach Erreichen des Drehanschlags dreht der erste Ring 6 weiter, wobei der Stellring 5 jedoch in seiner Drehposition verbleibt und die Verbindungselemente 18 an der Innenfläche 19 des ersten Rings 6 entlanggleiten.

Der Sperrring 5 hat ferner einen Ringabschnitt 15 mit einer Innenverzahnung 26. Axial an den Sperrring angrenzend ist ein mit dem hülsenförmigen Gehäuseteil 16 verbundenes zweites hülsenförmiges Gehäuseteil 27 vorgesehen. Das zweite hülsenförmige Gehäuseteil 27 weist eine zweite Innenverzahnung 28 auf, die gleich gestaltet ist, wie die Innenverzahnung 26 des Sperrrings 5.

Durch Verdrehen des Rampenrings 6 wird der Sperrring 5 über die Verbindungselemente 18 um einen begrenzten Drehweg mitgedreht. Dabei wird der Sperrring 5 aus ersten Drehstellung Pr1, in der dessen Innenverzahnung 26 gegenüber der Innenverzahnung 28 des Gehäuseteils 27 in Umfangsrichtung versetzt ist (Zahn-auf-Lücke-Stellung) in eine zweite Drehstellung Pr2 bewegt, in der die beiden Innenverzahnungen 26, 28 miteinander fluchten (Zahn-auf-Zahn-Stellung). In der ersten Drehstellung Pr1 liegen zumindest einige der Zähne des Sperrrings 5 in Umfangsbereichen von Zahnlücken des Gehäuseteils 27, so dass eine Axialbewegung eines mit dem Gehäuseteil 27 in Verzahnungseingriff befindlichen Bauteils 32 durch den Sperrring 5 blockiert wird. In der zweiten Drehstellung Pr2 bildet die Verzahnung 26 des Sperrrings 5 eine natürliche Fortsetzung der Verzahnung 28 des Gehäuseteils 27, so dass das Bauteil 32, das mit seiner korrespondierenden Außenverzahnung in die Innenverzahnung 28 des Gehäuseteils 27 eingreift, nunmehr axial in die Innenverzahnung 26 des Sperrrings 5 verschoben werden kann.

Die Kugelrampenanordnung 4 ist insbesondere so gestaltet, dass der Stellring 6 bei relativer Verdrehung gegenüber dem Stützring 8 in Richtung R1 soweit, bis der Sperrring 5 seinen Endanschlag 24 erreicht hat (zweite Drehposition Pr2), seine axiale Position Pa1 beibehält. Erst nachdem der Stellring 5 seine zweite Drehposition Pr2 eingenommen hat und das Bauteil 32 in die Verzahnung 26 des Sperrrings 5 eingreift, wandern die Kugeln der Kugelrampenanordnung 4 in flachere Bereiche, so dass der Stellring 6 axial vom Stützring 8 in Richtung einer zweiten axialen Position Pa2 wegbewegt wird.

Die Aktuatoranordnung 2 kann auf diese Weise zwei Funktionen realisieren, nämlich das Betätigen des Sperrrings 5, um eine Axialbewegung des Bauteils 32 wahlweise zu blockieren oder freizugeben, sowie das Betätigen eines weiteren Betätigungsglieds 49 mittels des axial bewegbaren Stellrings 6.

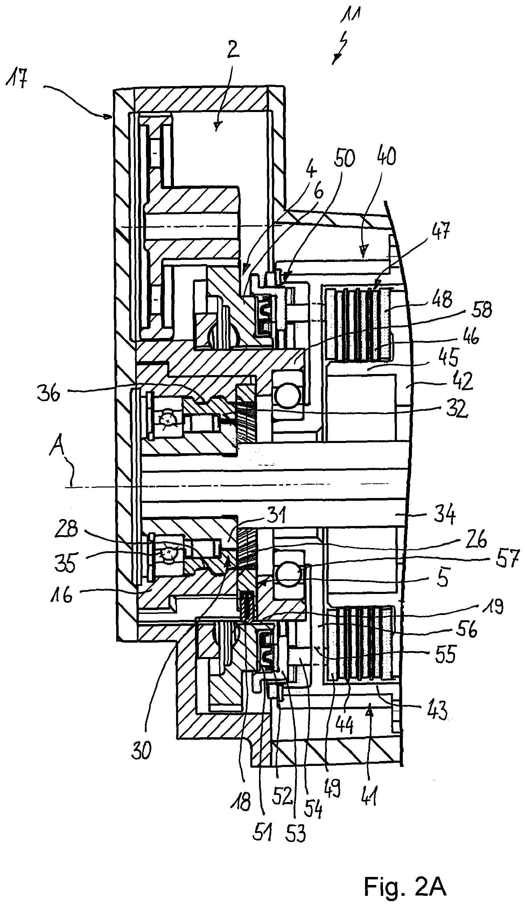

Die Figuren 2A bis 2C zeigen eine erfindungsgemäße Kupplungsanordnung 11 mit einer erfindungsgemäßen Aktuatoranordnung 2 gemäß Figur 1. Die Kupplungsanordnung 11 umfasst eine erste Kupplung 30, die in Form einer Formschlusskupplung gestaltet ist, und eine zweite Kupplung 40, die in Form einer Reibungskupplung gestaltet ist.

Die Formschlusskupplung 30 umfasst ein erstes Kupplungsteil 31, das drehfest mit einer Welle 34 verbunden ist, und das Bauteil 32 als zweites Kupplungsteil. Das erste Kupplungsteil ist mit einem Endabschnitt gegen eine Wellenschulter der Welle 34 axial abgestützt. Die Welle 34 mit dem darauf angebrachten ersten Kupplungsteil 31 ist mittels eines Lagers 35 im Gehäuseteil 16 um die Drehachse A drehbar gelagert und axial abgestützt. Ein Lagerinnenring des Lagers 35 ist zwischen einer Schulter des Kupplungsteils 31 und einem Axialsicherungsring axial abgestützt. Der Lageraußenring ist in dem Gehäuseteil 16 aufgenommen und mittels eines weiteren Axialsicherungsring axial abgestützt. Das zweite Kupplungsteil 32 hat eine Außenverzahnung 36, die mit der Innenverzahnung 28 des Gehäuseteils 16 zur Übertragung beziehungsweise Abstützung eines Drehmoments in Verzahnungseingriff ist, wobei das zweite Kupplungsteil 32 gegenüber dem Gehäuseteil 16 axial bewegbar ist.

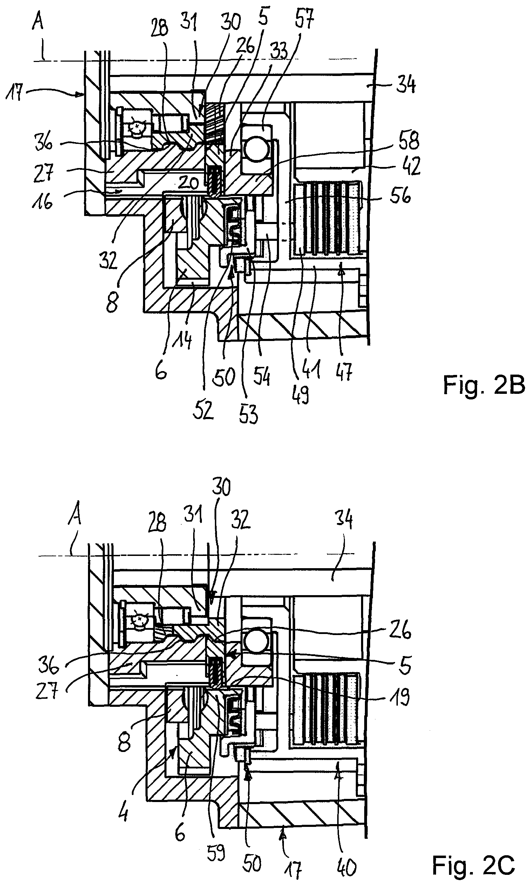

Die Figur 2B zeigt die Formschlusskupplung 30 in geschlossener Stellung, bei der das erste Kupplungsteil 31 und das zweite Kupplungsteil 32 miteinander in formschlüssigem Eingriff sind. In diesem Zustand ist die Welle 34 über das erste Kupplungsteil 31, das hiermit in Eingriff befindliche zweite Kupplungsteil 32 an dem Gehäuseteil 16 im Drehsinn abgestützt.

Zum Öffnen der Kupplung 31 wird, wie oben beschrieben, der Sperrring 5 durch Verdrehen des Rampenrings 6 von der ersten Drehstellung Pr1, in welcher die Sperrring-Innenverzahnung 26 gegenüber der Gehäuse-Innenverzahnung 28 in Drehrichtung versetzt ist, in die zweite Drehstellung Pr2 bewegt, in der die beiden Innenverzahnungen 26, 28 miteinander fluchten. Auf diese Weise wird die axiale Blockierung des Kupplungsteils 32 aufgehoben, welches nunmehr über das axiale Ende der Gehäuse-Innenverzahnung 28 hinaus axial in den Sperrring 5 verschoben werden kann.

Die Axialkraft zum Bewegen des Kupplungsteils 32 wird dadurch bewirkt, dass die Innenverzahnung 28 des Gehäuseteils 16 und entsprechend die Außenverzahnung 36 als Schrägverzahnungen gestaltet sind. Dabei sind die Schrägverzahnungen so gestaltet, dass ein in die Welle 34 eingeleitetes und entsprechend zwischen dem ersten Kupplungsteil 31 und dem zweiten Kupplungsteil 32 wirksames Drehmoment eine Axialbewegung des zweiten Kupplungsteils 32 im Öffnungssinn bewirkt.

Durch die Axialverschiebung kommt das Kupplungsteil 32 mit seiner Außenverzahnung 36 in Eingriff mit der Innenverzahnung 26 des Sperrrings 5 ein. Ferner wird das zweite Kupplungsteils 32 außer Eingriff vom ersten Kupplungsteil 31 gebracht, so dass das erste Kupplungsteil 31 und die damit verbundene Welle 34 gegenüber dem zweiten Kupplungsteil 32 beziehungsweise dem Gehäuseteil 16 frei drehen können. Die geöffnete Stellung der Formschlusskupplung 30 ist in Figur 2C gezeigt, in der erkennbar ist, dass das zweite Kupplungsteil 32 gegenüber dem ersten Kupplungsteil 31 axial verschoben ist und die Formschlussmittel entsprechend außer Eingriff sind.

Die zweite Kupplung 40 ist vorliegend als Reibungskupplung gestaltet, die ein erstes Kupplungsteil 41 und ein hiermit zur variablen Drehmomentübertragung verbindbares zweites Kupplungsteil 42 umfasst. Das erste Kupplungsteil 41 bildet einen ersten Lamellenträger 43, mit dem erste Lamellen 44 drehfest und axial beweglich verbunden sind. Das zweite Kupplungsteil 42 bildet einen zweiten Lamellenträger 45, mit dem zweite Lamellen 46 axial beweglich und drehfest verbunden sind. Die ersten und zweiten Lamellen 44, 46, die auch als Außenlamellen und Innenlamellen bezeichnet werden können, sind axial abwechselnd angeordnet und bilden gemeinsam ein Lamellenpaket 47. Das Lamellenpaket 47 ist in eine erste axiale Richtung über Stützplatte 48 am zweiten Kupplungsteil 42 axial abgestützt. Zum Beaufschlagen des Lamellenpakets 47 ist eine Druckplatte 49 vorgesehen, welche von der Kugelrampenanordnung 4 axial bewegbar ist.

Hierfür ist zwischen dem ersten Rampenring 6 und der Druckplatte 49 ein Kraftübertragungsmechanismus 50 vorgesehen, welcher eine axiale Bewegung des ersten Rampenrings 6 auf die Druckplatte 49 überträgt, so dass das Lamellenpaket 47 im Schließsinn der Kupplung 40 beaufschlagt wird. Der Kraftübertragungsmechanismus 50 umfasst einen Stützkörper 51, der gegen eine Stirnfläche des Rampenrings 6 axial abgestützt ist, ein Axiallager 52 zur Drehentkopplung einer relativen Drehbewegung des ersten Kupplungsteils 41 gegenüber dem Rampenring 6, ein Zwischenelement 53, das an dem Axiallager 52 axial abgestützt und gegenüber diesem drehbar ist, sowie mehrere über den Umfang verteilte Druckelemente 54, die mit dem Zwischenelement 53 verbunden sind und gemeinsam mit diesem axial bewegt werden. Die Druckelemente 54 erstrecken sich durch umfangsverteilte Öffnungen 55 (gestrichelt dargestellt) in einer Seitenwand 56 des ersten Kupplungsteils 41 in dieses hinein und sind mit der Druckplatte 49 in Kontakt, um diese in Richtung Lamellenpaket 47 zu beaufschlagen. Das erste Kupplungsteil 41 ist mittels eines Lagers 57 in einem Lagerabschnitt 58 des Gehäuseteils 16 um die Drehachse A drehbar gelagert.

Wie oben beschrieben, ist die Kugelrampenanordnung 4 so gestaltet, dass nachdem der Stellring 6. & seine zweite Drehposition Pc2 eingenommen hat und die Formschlusskupplung 30 geöffnet ist, die Kugeln in flachere Bereiche laufen. Hierdurch wird der Stellring 6 axial vom Stützring 8 weg in Richtung der Reibungskupplung 40 bewegt, um diese zu schließen. Durch entsprechende Steuerung des Aktuator-Antriebs kann die Drehposition des Rampenrings 6 und damit das von der Reibungskupplung 40 zu übertragende Drehmoment nach Bedarf variabel eingestellt werden. Zum erneuten Öffnen der Kupplung 40 bei abgeschaltetem Aktuator können ein oder mehrere Rückstellfedern vorgesehen sein, welche eine Bewegung der Druckplatte 49 in Richtung Kugelrampenanordnung 4 bewirken. Die Rückstellfeder (nicht dargestellt) kann beispielsweise zwischen dem Zwischenelement 52 und der Kupplungswand 56 angeordnet sein.

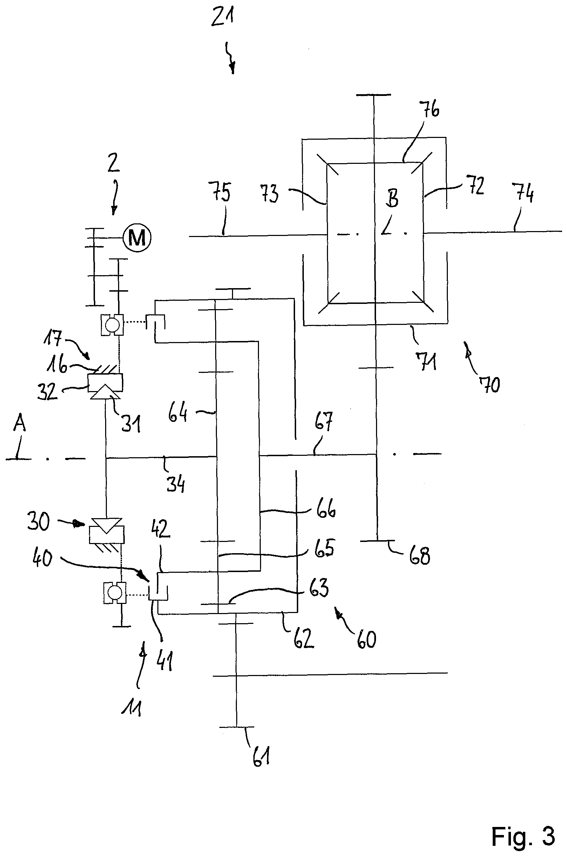

Die Figur 3 zeigt eine erfindungsgemäße Antriebsanordnung 21 mit einer erfindungsgemäßen Kupplungsanordnung 11 gemäß den Figuren 2A bis 2C, beziehungsweise mit einer erfindungsgemäßen Aktuatoranordnung 2 gemäß Figur 1, in schematischer Darstellung. Aufbau und Funktionsweise der Aktuatoranordnung 2 und der Kupplungsanordnung 11 gemäß Figur 3 entsprechen den Ausführungen gemäß den Figuren 1 und 2, so dass diesbezüglich abkürzend auf die obige Beschreibung Bezug genommen wird. Dabei sind gleiche beziehungsweise einander entsprechende Bauteile mit den gleichen Bezugszeichen versehen, wie bei den obigen Figuren.

Die Antriebsanordnung 21 umfasst eine Getriebeeinheit 60 und eine dieser im Leistungspfad nachgelagerte Leistungsverzweigungseinheit 70.

Die Getriebeeinheit 60 weist insbesondere zwei Übersetzungsstufen mit unterschiedlichen Übersetzungsverhältnissen auf. Hierfür umfasst die Getriebeeinheit 60 ein Umlaufrädergetriebe mit einem drehend antreibbaren Eingangsteil 62 mit einem Hohlrad 63 als Eingangsrad, einem hierzu koaxial angeordneten Stützrad 64, einer Mehrzahl von Planetenrädern 65, die mit dem Hohlrad 63 und dem Stützrad 64 in Verzahnungseingriff sind, und einem Trägerelement 66, auf dem die Planetenräder 65 drehbar gelagert sind.

Das Eingangsteil 62 weist eine Außenverzahnung auf, die mit einem Antriebsrad 61 einer Antriebswelle zur Übertragung einer Drehbewegung in Eingriff steht. Die Antriebswelle wird von einer elektrischen Maschine (nicht dargestellt) drehend angetrieben. Das Antriebsrad 61 und das Eingangsteil 62 wirken als Untersetzungsgetriebe zusammen, das eine Drehbewegung vom Schnellen ins Langsame übersetzt. Somit dreht Eingangsteil 62 langsamer als die Antriebswelle. Das Getriebeeingangsteil 62 ist fest mit dem ersten Kupplungsteil 41 verbunden, so dass beide gemeinsam um die Drehachse A rotieren. Der Planetenträger 66 ist fest mit dem zweiten Kupplungsteil 42 verbunden, so dass diese gemeinsam um die Drehachse A rotieren. Durch Betätigung der Reibungskupplung 40 im Schließsinne wird die Drehzahl des Trägerelements 66 an die Drehzahl des Eingangsteils 62 angepasst.

Das Stützrad 64, das koaxial zum Hohlrad 63 angeordnet ist, ist mit der Welle 34 und damit mit dem ersten Kupplungsteil 31 der Formschlusskupplung 30 drehfest verbunden. Somit ist das Stützrad 64 in der Schließstellung der Formschlusskupplung 30 am ortsfesten Bauteil 16 im Drehsinn abgestützt, und kann in der Offenstellung der Formschlusskupplung 30 frei drehen.

Die Planetenräder 65 sind an dem Planetenträger 44 drehbar gelagert und kämmen mit dem Hohlrad 63 und mit dem Stützrad 64. Die Verzahnungen der Planetenräder 65 mit dem Hohlrad 63 und mit dem Stützrad 64 sind vorzugsweise als Schrägverzahnungen ausgeführt. Der Planetenträger 66 ist fest mit einem Ausgangsteil 67 des Getriebes 60 verbunden.

In Schließstellung der Formschlusskupplung 30 und Offenstellung der Reibungskupplung 40 ist ein erstes Übersetzungsverhältnis zwischen dem Eingangsteil 62 und dem Trägerelement 66 gebildet. Dabei ist das Stützrad 64 über die Formschlusskupplung 30 drehfest mit dem Gehäuse 17 verbunden, während die zweite Reibungskupplung 40 das Hohlrad 63 von dem Stützrad 64 trennt. Die Drehbewegung des Hohlrads 63 wird somit über die um das Stützrad 64 umlaufenden Planetenräder 65 auf den Planetenträger 66 übertragen. Das Planetengetriebe 60 wirkt als Untersetzungsgetriebe, das eine Drehbewegung vom Schnellen ins Langsame übersetzt. Somit dreht der Planetenträger 66 langsamer als das Hohlrad 63, wobei ein erstes Übersetzungsverhältnis i1 gegeben ist.

Für die zweite Übersetzungsstufe trennt die Formschlusskupplung 30 das Stützrad 64 von dem Gehäuse 17, während die Reibungskupplung 40 ein Drehmoment vom Eingangsteil 62 auf das Trägerelement 66 überträgt. Dadurch wird das Planetengetriebe mit steigendem Schließgrad der Kupplung 40 zunehmend blockiert. Mit dem frei drehbaren Stützrad 64 wird so die Drehbewegung des Hohlrads 63 über die Planetenräder 65, die nicht um das Stützrad 64 umlaufen können, auf den Planetenträger 66 übertragen. Bei vollständig geschlossener Reibungskupplung 40 sind die Drehzahlen des Eingangsteils 62 beziehungsweise Hohlrads 63 einerseits und des Planetenträgers 66 beziehungsweise Ausgangsteils 67 identisch. Dabei ist ein zweites Übersetzungsverhältnis gegeben, das sich vom ersten Übersetzungsverhältnis unterscheidet. Dadurch, dass die zweite Kupplung 40 als Reibungskupplung gestaltet ist, können Drehmoment beziehungsweise Drehzahl variabel nach Bedarf eingestellt werden.

Das Ausgangsteil 67 des Planetengetriebes treibt über ein Antriebsrad 68 ein Eingangsteil 71 der Leistungsverzweigungseinheit 70 an. Die Leistungsverzweigungseinheit 70 ist vorliegend in Form eines Differentialgetriebes gestaltet, das eine eingeleitete Drehbewegung auf zwei Ausgangsteile 72, 73 zum Antreiben einer jeweiligen Seitenwelle 74, 75 aufteilt. Das Eingangsteil 71 ist in Form eines um die Drehachse B drehbaren Differentialkorbs gestaltet, in dem mehrere Differentialräder 76 drehbar gelagert sind, die mit den beiden Ausgangsrädern 72, 73 kämmen.

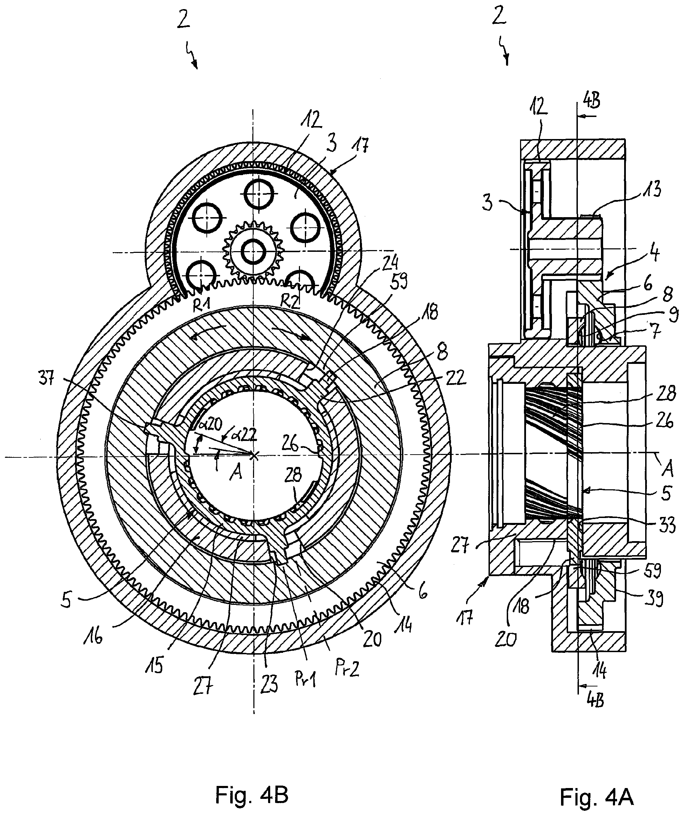

Die Figuren 4A und 4B zeigen eine erfindungsgemäße Aktuatoranordnung 2 in einer zweiten Ausführungsform, die der Ausführungsform gemäß den Figuren 1A bis 1C in weiten Teilen entspricht, so dass hinsichtlich der Gemeinsamkeiten auf die obige Beschreibung Bezug genommen wird. Dabei sind gleiche beziehungsweise einander entsprechende Einzelheiten mit gleichen Bezugszeichen versehen.

Ein Unterschied der vorliegenden Ausführungsform gemäß den Figuren 4A und 4B ist, dass der Sperrring 5 nicht von dem drehend antreibbaren Rampenring 6, sondern von dem axial abgestützten Rampenring 8 betätigt, das heißt verdreht wird.

Dabei ist vorgesehen, dass das Sperrelement 5 über die Verbindungselemente 18 drehfest mit dem zweiten Rampenring 8 verbunden ist, so dass beide gemeinsam um die Drehachse A drehen. In diesem Fall ist die Reibflächenpaarung im Leistungspfad zwischen dem drehend antreibbaren ersten Rampenring 6 und dem zweiten Rampenring 8 gebildet. Wenn der erste Rampenring 6 vom Antriebsrad 3 verdreht wird, dreht sich der zweite Rampenring 8 und der damit drehfest verbundene Sperrring 5 zunächst mit, bis der Sperrring 5 gegen einen Drehanschlag 23, 24 des ortsfesten Gehäuses 16 stößt. In diese ersten Drehverstellbereich wird der zweite Rampenring 8 mittels Reibkräften, die zwischen dem ersten Rampenring 6 und den Kugeln beziehungsweise den Kugeln und dem zweiten Rampenring 6 wirksam sind, mitgenommen. Nach dem Drehstopp des Sperrrings 5 und des damit verbundenen zweiten Rampenrings 8 dreht der erste Rampenring 6 gegenüber diesen weiter. Dabei rollen die Kugeln in den Kugelrillen 7, 9 in Richtung flacherer Abschnitte ab, so dass der erste Rampenring 6 vom zweiten Rampenring 6 axial weggedrückt wird.

Bei dieser Ausführungsform sind die Verbindungselemente 18 einteilig mit dem Ringabschnitt 15 ausgeführt, welche formschlüssig in entsprechende Ausnehmungen 37 eingreifen des Rampenrings 8 eingreifen, so dass beide miteinander drehfest verbunden sind.

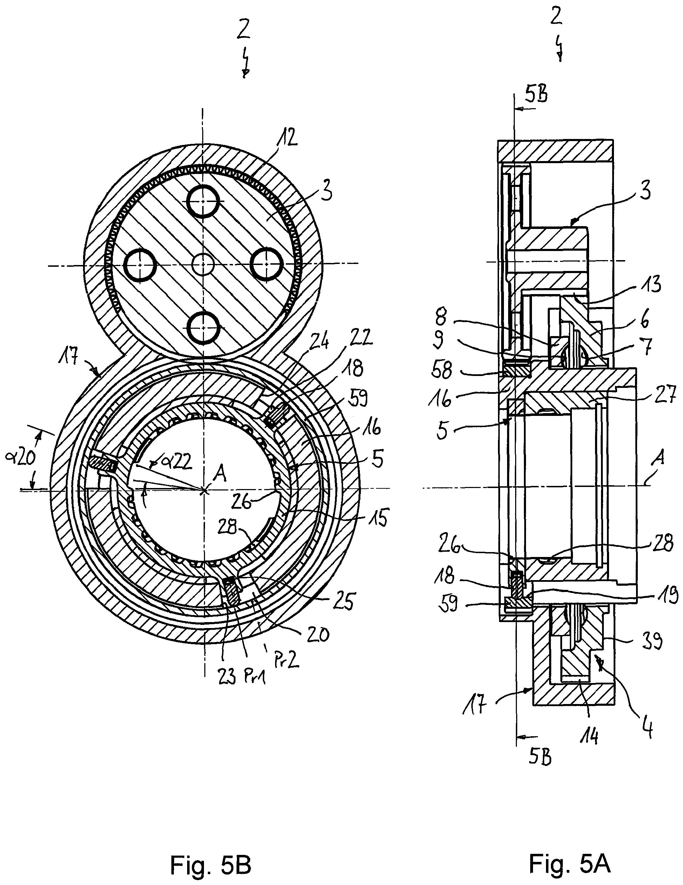

Die Figuren 5A und 5B zeigen eine erfindungsgemäße Aktuatoranordnung 2 in einer weiteren Ausführungsform, die in weiten Teilen der Ausführungsform gemäß den Figuren 1A bis 1C entspricht. Insofern wird hinsichtlich der Gemeinsamkeiten auf die obige Beschreibung Bezug genommen, wobei gleiche beziehungsweise einander entsprechende Einzelheiten mit gleichen Bezugszeichen versehen sind, wie in den Figuren 1A bis 1C.

Ein Unterschied der vorliegenden Ausführungsform gemäß den Figuren 5A und 5B ist, dass der Betätigungsring 59 zum Verdrehen des Sperrrings 5 nicht an dem drehend antreibbaren Rampenring ausgebildet ist, sondern in Form eines separaten Zwischenrings gestaltet ist. Der Zwischenring 59, der auch als Zwischenrad bezeichnet werden kann, greift in die erste Verzahnung 12 des Antriebsrads 3 ein und wird von diesem drehend angetrieben. Die beiden Verzahnungen 12, 13 des Antriebsrads 3 haben einen unterschiedlichen Durchmesser beziehungsweise eine unterschiedliche Zähnezahl, so dass die der erste Räderpaarung (12, 58) ein anderes Übersetzungsverhältnis hat als die zweite Räderpaarung (13, 14).

Das Zwischenrad 59 ist mit einer Innenumfangsfläche auf einem Lagersitz 58 des hülsenförmigen Gehäuseteils 16 um die Drehachse A drehbar gelagert. Durch Drehen des Antriebsrads 3 wird das Zwischenrad 59 entsprechend drehend abgetrieben, mit dem der Sperrring 5 über Reibflächenpaarungen in Kontakt ist. Dabei ist die Reibflächenpaarung zwischen den Kontaktflächen der Verbindungselemente 18 und einer Innenumfangsfläche 19 des Zwischenrads 38 gebildet.

Durch die Federvorspannung werden die Verbindungselemente 18 in Reibkontakt mit der Innenfläche 19 des Zwischenrads 59 gebracht, so dass sie bei Drehung des Zwischenrads 59 mit diesem mitdrehen, bis sie je nach Drehrichtung gegen den einen oder anderen Drehanschlag 23, 24 anschlagen. Nach Erreichen des jeweiligen Drehanschlags dreht das Zwischenrad 59 weiter, wobei der Sperrring 5 jedoch in seiner Drehposition verbleibt und die Verbindungselemente 18 an der Innenfläche 19 des Zwischenrads entlanggleiten.

Wenn der Sperrring 5 in die zweite Drehstellung Pr2 gedreht ist, fluchten die beiden Innenverzahnungen 26, 28 des verzahnten Gehäuseteils 27 und des Sperrrings 5 miteinander, so dass ein mit dem Gehäuseteil 27 in Verzahnungseingriff befindliches Bauteil sich axial in den Sperrring 5 hinein bewegen kann, um beispielsweise eine Formschlusskupplung zu betätigen.

Die Kugelrampenanordnung 4 ist im Wesentlichen wie bei den obigen Ausführungsformen gestaltet. Durch Drehen des ersten Rampenrings 6 gegenüber dem zweiten Rampenring 8 wandern die Kugeln in flachere Bereiche, so dass der erste Rampenring 6 axial vom zweiten Rampenring 8 wegbewegt wird, um beispielsweise eine Reibungskupplung zu betätigen.

### Bezugszeichenliste

- 2: Aktuatoranordnung
- 3: Antriebsrad
- 4: Rampenringanordnung
- 5: Antriebsrad
- 6: erster Rampenring
- 7: erste Kugelbahn
- 8: zweiter Rampenring
- 9: zweite Kugelbahn
- 10: Kugeln
- 11: Kupplungsanordnung
- 12: erste Verzahnung
- 13: zweite Verzahnung
- 14: Verzahnung (6)
- 15: Ringabschnitt
- 16: ortsfestes Bauteil
- 17: Gehäuse
- 18: Verbindungselemente
- 19: Innenumfangsfläche
- 20: Öffnung
- 21: Antriebsanordnung
- 22: Stützelement
- 23: Drehanschlag
- 24: Drehanschlag
- 25: Federelement
- 26: Innenverzahnung (5)
- 27: Gehäuseteil
- 28: Innenverzahnung (27)
- 29: Ende (16)
- 30: erste Kupplung
- 31: erstes Kupplungsteil
- 32: zweites Kupplungsteil / Bauteil
- 33: Axialanschlag
- 34: Welle
- 35: Lager
- 36: Außenverzahnung
- 37: Ausnehmung
- 38: Zwischenrad
- 39: Betätigungsfläche
- 40: zweite Kupplung
- 41: erstes Kupplungsteil
- 42: zweites Kupplungsteil
- 43: erster Lamellenträger
- 44: erste Lamellen
- 45: zweiter Lamellenträger
- 46: zweite Lamellen
- 47: Lamellenpaket
- 48: Stützplatte
- 49: Druckplatte
- 50: Kraftübertragungsmechanismus
- 51: Stützkörper
- 52: Axiallager
- 53: Zwischenelement
- 54: Druckelement
- 55: Öffnung
- 56: Seitenwand
- 57: Lager
- 58: Lagersitz
- 59: Betätigungsring
- 60: Getriebe
- 61: Antriebsrad
- 62: Eingangsteil
- 63: Hohlrad
- 64: Stützrad
- 65: Planetenrad
- 66: Planetenträger
- 67: Ausgangsteil
- 68 69 70: Leistungsverzweigungseinheit
- 71: Eingangsteil
- 72: Ausgangsteil
- 73: Ausgangsteil
- 74: Seitenwelle
- 75: Seitenwelle
- 76: Differentialrad

- A: Achse
- α: Winkel
- Pa: axiale Position
- Pr: Drehposition
- R: Richtung

## Patentansprüche

1. Aktuatoranordnung für eine Kupplungsanordnung im Antriebsstrang eines Kraftfahrzeugs, umfassend:
ein drehend antreibbares Antriebsrad (3);
einen von dem Antriebsrad (3) drehend antreibbaren ersten Rampenring (6) und einen zweiten Rampenring (8), wobei der erste Rampenring (6) und der zweite Rampenring (8) gegeneinander axial abgestützt sind, und ausgestaltet sind, um eine relative Drehbewegung in eine Axialbewegung umzusetzen;
**gekennzeichnet durch**
einen Sperrring (5), der in einem ortsfesten Gehäuse (17) um eine Drehachse (A) drehbar gelagert ist und der mit dem Antriebsrad (3) über einen Leistungspfad antriebsverbunden ist, wobei der Sperrring (5) von dem Antriebrad (3) von einer ersten Drehposition (Pr1) gegen einen Drehanschlag (23, 24) in eine zweite Drehposition (Pr2) drehbar ist;
wobei im Leistungspfad zwischen dem Antriebsrad (3) und dem Sperrring (5) zumindest eine Reibflächenpaarung (28, 19; 7, 9) vorgesehen ist, über die ein Drehmoment unter Ausnutzung von Reibkräften auf den Sperrring (5) übertragbar ist; und
wobei der erste Rampenring (6), nachdem der Sperrring (5) den Drehanschlag (23, 24) erreicht hat, vom Antriebsrad (3) weiter drehend-antreibbar ist.

2. Aktuatoranordnung nach Anspruch 1,
**dadurch gekennzeichnet,**
**dass** der Sperrring (5) einen Ringabschnitt (15) und zumindest ein hiervon abstehendes Verbindungselement (18) zum Einleiten eines Drehmoments in den Sperrring (5) aufweist.

3. Aktuatoranordnung nach einem der Ansprüche 1 oder 2,
**dadurch gekennzeichnet,**
**dass** das ortsfeste Gehäuse (17) einen hülsenförmigen Abschnitt (16) aufweist, in dem der Sperrring (5) begrenzt drehbar gelagert ist, wobei der hülsenförmige Abschnitt (16) zumindest einen radialen Durchbruch (20) aufweist, in den das zumindest eine Verbindungselement (18) des Sperrrings (5) eingreift.

4. Aktuatoranordnung nach einem der Ansprüche 1 bis 3,
**dadurch gekennzeichnet,**
**dass** das zumindest eine Verbindungselement (18) des Sperrrings (5) von einem im Leistungspfad zwischen dem Antriebsrad (3) und dem Sperrring (5) angeordneten Betätigungsring (59) verdrehbar ist.

5. Aktuatoranordnung nach Anspruch 4,
**dadurch gekennzeichnet,**
**dass** der Sperrring (5) zumindest ein Federelement (25) aufweist, um das zumindest eine Verbindungselement (18) federnd vorzuspannen, wobei das zumindest eine Verbindungselement (18) von dem zumindest einen Federelement (25) gegen den Betätigungsring (59) federnd beaufschlagt ist und mit diesem in Reibkontakt steht.

6. Aktuatoranordnung nach Anspruch 5,
**dadurch gekennzeichnet,**
**dass** der Betätigungsring (59) drehfest mit dem drehend antreibbaren ersten Rampenring (6) verbunden ist, insbesondere einteilig mit diesem gestaltet ist, wobei die Reibflächenpaarung zwischen einer Kontaktfläche des Verbindungselements (18) und einer Anlagefläche (19) des Betätigungsrings (59) gebildet ist.

7. Aktuatoranordnung nach Anspruch 5,
**dadurch gekennzeichnet,**
**dass** der Betätigungsring (59) in Form eines Zwischenrads gestaltet ist, das von dem Antriebsrad (3) um die Drehachse (A) drehend antreibbar ist, wobei die Reibflächenpaarung zwischen einer Kontaktfläche des Verbindungselements (18) und einer Anlagefläche (19) des Zwischenrads (38) gebildet ist.

8. Aktuatoranordnung nach Anspruch 6,
**dadurch gekennzeichnet,**
**dass** das Antriebsrad (3) eine erste Verzahnung (12) zum Antreiben des Zwischenrads und eine zweite Verzahnung (13) zum Antreiben des ersten Rampenrings (6) aufweist, wobei die beiden Verzahnungen (12, 13) einen unterschiedlichen Durchmesser aufweisen.

9. Aktuatoranordnung nach Anspruch 4,
**dadurch gekennzeichnet,**
**dass** der Sperrring (5) über das zumindest eine Verbindungselement (18) drehfest mit dem zweiten Rampenring (8) verbunden ist, so dass beide gemeinsam drehen, wobei die Reibflächenpaarung im Leistungspfad zwischen dem drehend antreibbaren ersten Rampenring (6) und dem zweiten Rampenring (8) gebildet ist.

10. Aktuatoranordnung nach einem der Ansprüche 1 bis 9,
**dadurch gekennzeichnet,**
**dass** der erste Rampenring (6) und der zweite Rampenring (8) mittelbar über Kugeln gegeneinander axial abgestützt sind, die in entsprechenden Kugelrillen (7, 9) des ersten und zweiten Rampenrings (6, 8) laufen.

11. Aktuatoranordnung nach einem der Ansprüche 1 bis 10,
**dadurch gekennzeichnet,**
**dass** der zweite Rampenring (8) gegen das ortsfeste Gehäuse (17) axial abgestützt ist, wobei der erste Rampenring (6) durch drehendes Antreiben mittels des Antriebsrads (3) aus einer ersten Axialposition (Pa1), in welcher der erste Rampenring (6) an den zweiten Rampenring (8) axial angenähert ist, in eine zweite Axialposition (Pa2), in welcher der erste Rampenring (6) vom zweiten Rampenring (8) axial beabstandet ist, bewegbar ist,
wobei der erste Rampenring (6) an seiner vom zweiten Rampenring (8) abgewandten Seite eine Betätigungsfläche (39) zum axialen Beaufschlagen einer Reibungskupplung (40) aufweist.

12. Antriebsanordnung mit einer Aktuatoranordnung nach einem der Ansprüche 1 bis 11, umfassend
eine Formschlusskupplung (30) mit einem ersten Kupplungselement (31) und einem hierzu axial bewegbaren zweiten Kupplungselement (32), wobei das zweite Kupplungselement (32) in einer Schließstellung drehfest mit dem ersten Kupplungselement (31) verbunden ist und in einer Offenstellung vom ersten Kupplungselement (31) entkoppelt ist, um gegenüber diesem frei drehbar zu sein,
eine Reibungskupplung (40) zur variablen Drehmomentübertragung zwischen einem ersten Kupplungsteil (41) und einem zweiten Kupplungsteil (42),
wobei der Sperrring (5) der Aktuatoranordnung in der ersten Drehposition (Pr1) eine Axialbewegung des zweiten Kupplungselements (32) der Formschlusskupplung (30) blockiert, wobei die Formschlusskupplung geschlossen ist,
wobei der Sperrring (5), durch Verdrehen in die zweite Drehposition (Pr2) mittels des Antriebsrads (3), das zweite Kupplungselement (32) der Formschlusskupplung freigibt, so dass die Formschlusskupplung (30) geöffnet wird,
wobei bei weiterem Verdrehen des Antriebsrads (3) der Sperrring (5) in der zweiten Drehposition (Pr2) verbleibt und die Reibungskupplung (40) von dem drehend antreibbaren ersten Rampenring (6) im Schließsinn beaufschlagt wird.

13. Antriebsanordnung nach Anspruch 12,
**dadurch gekennzeichnet,**
**dass** die Reibungskupplung (40) ein Lamellenpaket (47) zwischen dem ersten Kupplungsteil (41) und dem zweiten Kupplungsteil (42) aufweist,
wobei das Lamellenpaket (47) von einer Druckplatte (49) axial beaufschlagbar ist, die von dem ersten Rampenring (6) betätigbar ist, wobei zwischen dem ersten Rampenring (6) und der Druckplatte (49) ein Axiallager (52) zur Drehentkopplung vorgesehen ist.

14. Antriebsanordnung nach einem der Ansprüche 12 oder 13,
**dadurch gekennzeichnet,**
**dass** ein Umlaufrädergetriebe (60) vorgesehen ist mit
einem Eingangsrad (63), das von der elektrischen Maschine um eine Drehachse (A) drehend antreibbar ist,
einem Stützrad (64), das koaxial zum Eingangsrad (63) drehbar angeordnet ist und das mit dem ersten Kupplungselement (31) der Formschlusskupplung (30) drehfest verbunden ist, wobei das Stützrad (64) in der Schließstellung der Formschlusskupplung (30) am ortsfesten Bauteil (17) im Drehsinn abgestützt ist, und in einer Offenstellung der Formschlusskupplung (30) frei drehbar ist,
einer Mehrzahl von Planetenrädern (65), die mit dem Eingangsrad (63) und dem Stützrad (64) in Verzahnungseingriff sind, und
einem Trägerelement (66), auf dem die Planetenräder (65) drehbar gelagert sind und das um die Drehachse (A) drehend antreibbar ist, um Drehmoment auf eine nachgelagerte Antriebseinheit (70) zu übertragen,
wobei die Reibungskupplung (40) im Leistungspfad zwischen einem der Teile Eingangsrad (63), Stützrad (64) und Trägerelement (66) und einem anderen der Teile Eingangsrad (63), Stützrad (64) und Trägerelement (66) angeordnet ist, und
wobei das Trägerelement (66) des Umlaufrädergetriebes (60) mit einer nachgelagerten Leistungsverzweigungseinheit (70) antriebsverbunden ist, die insbesondere in Form eines Differentialgetriebes gestaltet ist.

15. Antriebsanordnung nach einem der Ansprüche 12 bis 14,
**dadurch gekennzeichnet,**
**dass** in Schließstellung der Formschlusskupplung (30) und Offenstellung der Reibungskupplung (40) ein erstes Übersetzungsverhältnis (i1) zwischen dem Eingangsrad (63) und dem Trägerelement (66) gebildet ist, und
**dass** in Offenstellung der Formschlusskupplung (30) mittels der Reibungskupplung (40) ein variables Drehmoment zwischen dem Eingangsrad (63) und dem Trägerelement (66) übertragbar ist, wobei bei vollständig geschlossener Reibungskupplung (40) ein zweites Übersetzungsverhältnis (i2) zwischen dem Eingangsrad (63) und dem Trägerelement (66) gebildet ist.

## Claims

1. Actuator assembly for a clutch arrangement in the driveline of a motor vehicle, comprising:
a rotatably drivable drive gear (3);
a first ramp ring (6), which is rotatably drivable by the drive gear (3), and a second ramp ring (8), wherein the first ramp ring (6) and the second ramp ring (8) are axially supported against each other and are configured to convert a relative rotary movement into an axial movement;
chararcterised by
a locking ring (5) which is mounted in a stationary housing (17) so as to be rotatable about an axis of rotation (A) and which is drivingly connected to the drive gear (3) via a power path, the locking ring (5) being rotatable by the drive gear (3) from a first rotational position (Pr1) against a rotation stop (23, 24) into a second rotational position (Pr2);
wherein at least one friction face pairing (28, 19; 7, 9) is provided in the power path between the drive gear (3) and the locking ring (5), via which a torque can be transmitted to the locking ring (5) by means of frictional forces; and
wherein the first ramp ring (6), after the locking ring (5) has reached the rotation stop (23, 24), is further rotatably drivable by the drive gear (3).

2. Actuator assembly according to claim 1,
**characterised in**
**that** the locking ring (5) has a ring portion (15) and at least one connecting element (18) projecting therefrom for introducing a torque into the locking ring (5).

3. Actuator assembly according to one of claims 1 or 2,
**characterised in**
**that** the stationary housing (17) has a sleeve-shaped portion (16) in which the locking ring (5) is supported so as to be rotatable to a limited extent, wherein the sleeve-shaped portion (16) comprises at least one radial through-opening (20) into which the at least one connecting element (18) of the locking ring (5) engages.

4. Actuator assembly according to any one of claims 1 to 3,
**characterised in**
**that** the at least one connecting element (18) of the locking ring (5) is rotatable by an actuating ring (59) arranged in the power path between the drive gear (3) and the locking ring (5).

5. Actuator assembly according to claim 4,
**characterised in**
**that** the locking ring (5) has at least one spring element (25) for resiliently preloading the at least one connecting element (18), wherein the at least one connecting element (18) is resiliently loaded by the at least one spring element (25) against the actuating ring (59) and is in frictional contact therewith.

6. Actuator assembly according to claim 5,
**characterised in**
**that** the actuating ring (59) is connected in a rotationally fixed manner to the rotationally drivable first ramp ring (6), in particular is integrally formed therewith, wherein the friction face pairing is formed between a contact face of the connecting element (18) and a supporting face (19) of the actuating ring (59).

7. Actuator assembly according to claim 5,
**characterised in**
**that** the actuating ring (59) is configured in the form of an intermediate gear which is rotatably drivable about the axis of rotation (A) by the drive gear (3), wherein the friction face pairing is formed between a contact face of the connecting element (18) and a support face (19) of the intermediate gear (38).

8. Actuator assembly according to claim 6,
**characterised in**
**that** the drive gear (3) has a first toothing (12) for driving the intermediate gear and a second toothing (13) for driving the first ramp ring (6), wherein the two toothings (12, 13) have a different diameter.

9. Actuator assembly according to claim 4,
**characterised in**
**that** the locking ring (5) is connected to the second ramp ring (8) in a rotationally fixed manner via the at least one connecting element (18), so that both rotate together, wherein the friction face pairing is formed in the power path between the rotatably drivable first ramp ring (6) and the second ramp ring (8).

10. Actuator assembly according to any one of claims 1 to 9,
**characterised in**
**that** the first ramp ring (6) and the second ramp ring (8) are axially supported against each other indirectly via balls which run in respective ball grooves (7, 9) of the first and second ramp rings (6, 8).

11. Actuator assembly according to any one of claims 1 to 10,
**characterised in**
**that** the second ramp ring (8) is axially supported against the stationary housing (17), wherein the first ramp ring (6) is movable by being rotatably driven by the drive gear (3) from a first axial position (Pa1), in which the first ramp ring (6) is axially close to the second ramp ring (8), into a second axial position (Pa2), in which the first ramp ring (6) is axially spaced from the second ramp ring (8), wherein the first ramp ring (6), on its side facing away from the second ramp ring (8), includes an actuating face (39) for axially loading a friction clutch (40).

12. Drive arrangement comprising an actuator assembly according to any one of claims 1 to 11, comprising
an interlocking clutch (30) having a first clutch element (31) and a second clutch element (32) axially movable relative thereto, the second clutch element (32) being connected in a rotationally fixed manner to the first clutch element (31) in a closed position and being disconnected from the first clutch element (31) in an open position in order to be freely rotatable relative thereto,
a friction clutch (40) for variable torque transmission between a first clutch part (41) and a second clutch part (42),
wherein the locking ring (5) of the actuator assembly in the first rotational position (Pr1) blocks an axial movement of the second clutch element (32) of the interlocking clutch (30), wherein the interlocking clutch is closed,
wherein the locking ring (5), by being rotated into the second rotational position (Pr2) by the drive gear (3), releases the second clutch element (32) of the interlocking clutch so that the interlocking clutch (30) is opened,
wherein upon further rotation of the drive gear (3) the locking ring (5) remains in the second rotational position (Pr2) and the friction clutch (40) is loaded by the rotationally drivable first ramp ring (6) in the closing sense.

13. Drive arrangement according to claim 12,
**characterised in**
**that** the friction clutch (40) has a disk pack (47) between the first clutch part (41) and the second clutch part (42),
wherein the disk pack (47) is axially loadable by a pressure plate (49), which can be actuated by the first ramp ring (6), wherein an axial bearing (52) is provided between the first ramp ring (6) and the pressure plate (49) for rotational decoupling.

14. Drive arrangement according to any one of claims 12 or 13,
**characterised in**
**that** an epicyclic gearing (60) is provided with
an input gear (63) which is rotatably drivable by the electric machine about an axis of rotation (A),
a support gear (64), which is rotatably arranged coaxially to the input gear (63) and which is connected to the first clutch element (31) of the interlocking clutch (30) in a rotationally fixed manner, wherein the support gear (64) in the closed position of the interlocking clutch (30) is supported on the stationary component (17) against rotation, and in an open position of the interlocking clutch (30) is freely rotatable,
a plurality of planetary gears (65) in meshing engagement with the input gear (63) and the support gear (64), and
a carrier element (66) on which the planetary gears (65) are rotatably mounted and which is rotatably drivable about the axis of rotation (A) to transmit torque to a downstream drive unit (70),
wherein the friction clutch (40) is arranged in the power path between one of the input gear (63), support gear (64), and carrier element (66) and another one of the input gear (63), support gear (64), and carrier element (66), and
wherein the carrier element (66) of the epicyclic gearing (60) is drivingly connected to a downstream power distribution unit (70), which is configured in particular in the form of a differential gearing.

15. Drive arrangement according to any one of claims 12 to 14,
**characterised in**
**that**, in the closed position of the interlocking clutch (30) and the open position of the friction clutch (40), a first transmission ratio (i1) is provided between the input gear (63) and the carrier element (66), and
**that**, in the open position of the interlocking clutch (30), a variable torque is transmittable between the input gear (63) and the carrier element (66) by the friction clutch (40), wherein when the friction clutch (40) is fully closed, a second transmission ratio (i2) is provided between the input gear (63) and the carrier element (66).

## Revendications

1. Ensemble actionneur pour un dispositif d'embrayage dans la chaîne cinématique d'un véhicule automobile, comprenant :
une roue d'entraînement (3) pouvant être entraînée en rotation ;
une première bague de rampe (6) pouvant être entraînée en rotation par la roue d'entraînement (3) et une deuxième bague de rampe (8), la première bague de rampe (6) et la deuxième bague de rampe (8) étant soutenues axialement l'une par rapport à l'autre, et étant conçues pour convertir un mouvement de rotation relatif en un mouvement axial ;
**caractérisé par**
une bague de blocage (5) qui est montée dans un boîtier fixe (17) de manière à pouvoir tourner autour d'un axe de rotation (A) et qui est reliée en entraînement à la roue d'entraînement (3) par l'intermédiaire d'un chemin de puissance, la bague de blocage (5) pouvant être tournée par la roue d'entraînement (3) d'une première position de rotation (Pr1) contre une butée de rotation (23, 24) dans une deuxième position de rotation (Pr2) ;
au moins une paire de surfaces de friction (28, 19 ; 7, 9) étant prévue dans le chemin de puissance entre la roue d'entraînement (3) et la bague de blocage (5), par laquelle un couple de rotation peut être transmis à la bague de blocage (5) en utilisant des forces de friction ; et
dans lequel, après que la bague de blocage (5) a atteint la butée de rotation (23, 24), la première bague de rampe (6) peut continuer à être entraînée en rotation par la roue d'entraînement (3).

2. Ensemble actionneur selon la revendication 1,
**caractérisé en ce**
**que** la bague de blocage (5) présente une section annulaire (15) et au moins un élément de liaison (18) faisant saillie de celle-ci pour introduire un couple de rotation dans la bague de blocage (5).

3. Ensemble actionneur selon l'une des revendications 1 ou 2,
**caractérisé en ce**
**que** le boîtier fixe (17) présente une section en forme de douille (16) dans laquelle la bague de blocage (5) est logée de manière à pouvoir tourner de manière limitée, la section en forme de douille (16) présentant au moins un passage radial (20) dans lequel s'engage le au moins un élément de liaison (18) de la bague de blocage (5).

4. Ensemble actionneur selon l'une quelconque des revendications 1 à 3,
**caractérisé en ce**
**que** le au moins un élément de liaison (18) de la bague de blocage (5) peut être tourné par une bague d'actionnement (59) disposée dans le chemin de puissance entre la roue d'entraînement (3) et la bague de blocage (5).

5. Ensemble actionneurs selon la revendication 4,
**caractérisé en ce**
**que** la bague de blocage (5) présente au moins un élément de ressort (25) pour précontraindre élastiquement le au moins un élément de liaison (18), le au moins un élément de liaison (18) étant sollicité élastiquement par le au moins un élément de ressort (25) contre la bague d'actionnement (59) et étant en contact de friction avec celle-ci.

6. Ensemble actionneurs selon la revendication 5,
**caractérisé en ce**
**que** la bague d'actionnement (59) est reliée solidairement en rotation à la première bague de rampe (6) pouvant être entraînée en rotation, en particulier est réalisée d'une seule pièce avec celle-ci, l'appariement de surfaces de frottement étant formé entre une surface de contact de l'élément de liaison (18) et une surface d'appui (19) de la bague d'actionnement (59).

7. Ensemble actionneurs selon la revendication 5,
**caractérisé en ce**
**que** la bague d'actionnement (59) est conçu sous la forme d'une roue intermédiaire qui peut être entraînée en rotation autour de l'axe de rotation (A) par la roue d'entraînement (3), l'appariement de surfaces de friction étant formé entre une surface de contact de l'élément de liaison (18) et une surface d'appui (19) de la roue intermédiaire (38).

8. Ensemble actionneurs selon la revendication 6,
**caractérisé en ce**
**que** la roue d'entraînement (3) présente une première denture (12) pour l'entraînement de la roue intermédiaire et une deuxième denture (13) pour l'entraînement de la première bague de rampe (6), les deux dentures (12, 13) présentant un diamètre différent.

9. Ensemble actionneurs selon la revendication 4,
**caractérisé en ce**
**que** la bague de blocage (5) est reliée solidairement en rotation à la deuxième bague en rampe (8) par l'intermédiaire de l'au moins un élément de liaison (18), de sorte que les deux tournent ensemble, l'appariement de surfaces de friction étant formé dans le chemin de puissance entre la première bague en rampe (6) pouvant être entraînée en rotation et la deuxième bague en rampe (8).

10. Ensemble actionneur selon l'une quelconque des revendications 1 à 9,
**caractérisé en ce**
**que** le premier anneau de rampe (6) et le deuxième anneau de rampe (8) sont indirectement supportés axialement l'un par rapport à l'autre par des billes qui se déplacent dans des rainures de billes correspondantes (7, 9) des premier et deuxième anneaux de rampe (6, 8).

11. Ensemble actionneur selon l'une quelconque des revendications 1 à 10,
**caractérisé en ce**
**que** la deuxième bague de rampe (8) est soutenue axialement contre le boîtier fixe (17), la première bague de rampe (6) pouvant être déplacée, par entraînement en rotation au moyen de la roue d'entraînement (3), d'une première position axiale (Pa1), dans laquelle la première bague de rampe (6) est axialement rapprochée de la deuxième bague de rampe (8), à une deuxième position axiale (Pa2), dans laquelle la première bague de rampe (6) est axialement espacée de la deuxième bague de rampe (8),
la première bague de rampe (6) présentant, sur son côté opposé à la deuxième bague de rampe (8), une surface d'actionnement (39) pour solliciter axialement un embrayage à friction (40).

12. Ensemble d'entraînement avec un ensemble actionneur selon l'une des revendications 1 à 11, comprenant
un accouplement à verrouillage de forme (30) avec un premier élément d'accouplement (31) et un deuxième élément d'accouplement (32) mobile axialement par rapport à celui-ci, le deuxième élément d'accouplement (32) étant relié solidairement en rotation au premier élément d'accouplement (31) dans une position de fermeture et étant découplé du premier élément d'accouplement (31) dans une position d'ouverture afin de pouvoir tourner librement par rapport à celui-ci,
un embrayage à friction (40) pour la transmission variable du couple entre une première partie d'embrayage (41) et une deuxième partie d'embrayage (42),
dans lequel la bague de blocage (5) de l'ensemble actionneur bloque, dans la première position de rotation (Pr1), un mouvement axial du deuxième élément d'accouplement (32) de l'accouplement à verrouillage de forme (30), l'accouplement à verrouillage de forme étant fermé,
dans lequel la bague de blocage (5), en tournant dans la deuxième position de rotation (Pr2) au moyen de la roue d'entraînement (3), libère le deuxième élément d'accouplement (32) de l'accouplement à verrouillage de forme, de sorte que l'accouplement à verrouillage de forme (30) est ouvert,
dans lequel, lorsque la roue d'entraînement (3) continue à tourner, la bague de blocage (5) reste dans la deuxième position de rotation (Pr2) et l'embrayage à friction (40) est sollicité dans le sens de la fermeture par la première bague en rampe (6) pouvant être entraînée en rotation.

13. Ensemble d'entraînement selon la revendication 12,
**caractérisé en ce**
**que** l'embrayage à friction (40) présente un paquet de lamelles (47) entre la première partie d'embrayage (41) et la deuxième partie d'embrayage (42), le paquet de lamelles (47) pouvant être sollicité axialement par une plaque de pression (49) qui peut être actionnée par la première bague à rampe (6), un palier axial (52) étant prévu entre la première bague à rampe (6) et la plaque de pression (49) pour le découplage en rotation.

14. Ensemble d'entraînement selon l'une des revendications 12 ou 13,
**caractérisé en ce**
**qu'**il est prévu un engrenage planétaire (60) avec
une roue d'entrée (63) qui peut être entraînée en rotation par la machine électrique autour d'un axe de rotation (A),
une roue d'appui (64) qui est disposée de manière à pouvoir tourner coaxiale-ment à la roue d'entrée (63) et qui est reliée de manière solidaire en rotation au premier élément d'accouplement (31) de l'accouplement à verrouillage de forme (30), la roue d'appui (64) étant appuyée dans le sens de rotation sur le composant fixe (17) dans la position de fermeture de l'accouplement à verrouillage de forme (30), et pouvant tourner librement dans une position d'ouverture de l'accouplement à verrouillage de forme (30),
une pluralité de roues planétaires (65) engrenant avec la roue d'entrée (63) et la roue de support (64), et
un élément porteur (66) sur lequel les roues planétaires (65) sont montées à rotation et qui peut être entraîné en rotation autour de l'axe de rotation (A) afin de transmettre un couple à une unité d'entraînement (70) située en aval,
dans lequel l'embrayage à friction (40) est disposé dans le chemin de puissance entre l'une des parties roue d'entrée (63), roue de support (64) et élément de support (66) et une autre des parties roue d'entrée (63), roue de support (64) et élément de support (66), et
l'élément de support (66) du engrenage planétaire (60) étant relié en entraînement à une unité de ramification de puissance (70) située en aval, qui est conçue en particulier sous la forme d'un engrenage différentiel.

15. Ensemble d'entraînement selon l'une quelconque des revendications 12 à 14,
**caractérisé en ce**
**que**, en position de fermeture de l'embrayage à verrouillage de forme (30) et en position d'ouverture de l'embrayage à friction (40), un premier rapport de transmission (i1) est formé entre la roue d'entrée (63) et l'élément de support (66), et
en position ouverte de l'embrayage à verrouillage de forme (30), un couple variable peut être transmis entre la roue d'entrée (63) et l'élément porteur (66) au moyen de l'embrayage à friction (40), un deuxième rapport de transmission (i2) étant formé entre la roue d'entrée (63) et l'élément porteur (66) lorsque l'embrayage à friction (40) est complètement fermé.
